# EUROPÄISCHE PATENTSCHRIFT

(11) **EP 1 298 451 B1**
(45) Veröffentlichungstag und Bekanntmachung des Hinweises auf die Patenterteilung: **29.06.2005**
(21) Anmeldenummer: 02015318.5
(22) Anmeldetag: 10.07.2002
(51) Int. Cl.: G01S 13/93, G08G 1/16

(54) **Umfeldüberwachungsvorrichtung**
Environment monitoring device
Dispositif pour évaluer l'environnement

(30) Priorität: 26.09.2001 DE 10147443
(43) Veröffentlichungstag der Anmeldung: 02.04.2003
(73) Patentinhaber: ROBERT BOSCH GMBH, 70442 Stuttgart (DE)
(72) Erfinder: Weber, Jens, Dr., 65779 Kelkheim-Fischbach (DE); Hötzel, Jürgen, Dr., 61197 Florstadt (DE); Kirchhof-Falter, Guenther, 64342 Seeheim-Jugenheim (DE); Muench, Dagmar, 60327 Frankfurt (DE)

(56) Entgegenhaltungen:
- WO-A-01/61377
- DE-A- 19 702 688
- US-B1- 6 232 910
- SASAYAMA T: "TECHNOLOGICAL TRENDS AND KEY TECHNOLOGIES IN INTELLIGENT VEHICLES" IEICE TRANSACTIONS ON ELECTRONICS, INSTITUTE OF ELECTRONICS INFORMATION AND COMM. ENG. TOKYO, JP, Bd. E76-C, Nr. 12, 1. Dezember 1993 (1993-12-01), Seiten 1717-1726, XP000426733 ISSN: 0916-8524
- KRAEMER M: "PROMETHEUS-PROJEKTE IM HAUSE DAIMLER-BENZ" MTZ MOTORTECHNISCHE ZEITSCHRIFT, FRANCKH'SCHE VERLAGSHANDLUNG,ABTEILUNG TECHNIK. STUTTGART, DE, 1992, Seiten 50-53, XP000324311 ISSN: 0024-8525

## Beschreibung

### Stand der Technik

Die Erfindung geht aus von einer Umfeldüberwachungsvorrichtung, insbesondere in einem Kraftfahrzeug nach der Gattung des Hauptanspruchs. Es sind schon Umfeldüberwachungsvorrichtungen bekannt, bei denen einzelne Systeme dazu dienen, die Orientierung des Fahrers in dem Umfeld seines Fahrzeugs zu verbessern. Die Systeme sind getrennt ausgeführt und haben jeweils eigene Hard- und Softwareteile, wobei die Hardwareteile im Fahrzeug unabhängig voneinander montiert werden. Z.B. sind Systeme bekannt, bei denen Ultraschallsensoren einer Nahbereichsabstandswarnung dienen, insbesondere einer Einparkhilfe, und bei denen unabhängig von der Einparkhilfe Radarsensoren für die Bestimmung größerer Abstände verwendet werden. Für die verschiedenen Systeme sind eigene Sensoren, eigene Steuergeräte und gegebenenfalls auch eigene Ausgabegeräte erforderlich, mit denen ein Fahrer gewarnt wird. Der Austausch vorhandener und die Ergänzung weiterer, neuer Systeme erfordert dabei die Installation zusätzlicher Hardware und gegebenenfalls auch eine aufwendige Verlegung von Verbindungskabeln. Zudem arbeiten die verschiedenen Systeme nebeneinander, so dass die Ausnutzung von Synergieeffekten zwischen verschiedenen Systemen nicht möglich ist.

Aus der WO 01/61337 ist ein Sensorsystem für ein Fahrzeug bekannt, bei dem verschiedene Sensoren am Fahrzeug angeordnet sind und das Fahrzeugumfeld überwachen. Ferner ist vorgesehen, einen Datenaustausch zwischen benachbarten Fahrzeugen vorzusehen, so dass die Sensordaten anderer Fahrzeuge mitverarbeitet werden können. Die Sensoren und der Datenaustausch werden über einen Prozessor in der Weise gesteuert, dass der Prozessor alle einkommenden Daten verarbeitet und Befehle zur Sensorsteuerung abgibt.

Aus der US 6,232,910 ist ein Fahrzeugradarsystem bekannt, bei dem in verschiedenen Abständen zum Fahrzeug nach Hindernissen gesucht wird. Entsprechend der jeweiligen Laufzeiten der Signale wird die Messdauer der Sensoren angepasst. Eine optische und/oder akustische Warnung wird an einen Fahrer des Fahrzeugs ausgegeben.

Aus der DE 197 02 688 A1 ist ein Hybridsystem zur Abstandsmessung in Kraftfahrzeugen bekannt, bei dem mehrere parallel zueinander arbeitende und jeweils einem anderen Ergebniswertbereich zugeordnete Überwachungseinrichtungen zu einem hybriden Überwachungssystem zusammengesetzt sind. Die Steuerung und die Auswertung der Signale erfolgt zentralisiert.

### Vorteile der Erfindung

Die vorliegende Erfindung mit den Merkmalen der Hauptansprüche 1 und 11, hat demgegenüber den Vorteil, dass durch eine Umfelderfassungseinheit und eine Sensorsteuereinheit eine gemeinsame Einrichtung für die Ansteuerung und Auswertung der Sensoren sowie für die Informationsübermittlung an einen Fahrer zur Verfügung gestellt wird. Je nach einer gewünschten Anforderung lassen sich die Sensoren speziell entsprechend der Vorgaben dieser Anforderungen betreiben. Dabei kann die jeweils für den jeweiligen Anwendungszweck am besten geeignete Sensoreinheit in einem geeigneten Betriebsmodus für die Messung ausgewählt werden. Werden Sensoren ausgetauscht, ergänzt oder erneuert, kann die Auswertung problemlos an die neuen Sensoren angepasst werden. Anstelle einer Vielzahl einzelner Steuergeräte und Ausgabeeinheiten im Fahrzeug kann die gesamte Abstandswarnung in den genannten, zentral angeordneten Steuereinheiten gebündelt werden. Die Anwendungsfunktionen sind unabhängig von der Sensorauswertung selbst.

Weiterhin ist vorteilhaft, in der Sensorsteuereinheit verschiedene Messprogramme für die Sensoren vorzusehen.

Dadurch können einzelne Sensoren für verschiedene Anwendungszwecke verwendet werden. So kann z.B. ein Ultraschallsensor zur Parklückenvermessung einerseits und zur Durchführung des Einparkvorgangs in die Parklücke ausgenutzt werden. Ebenso kann z.B. ein seitlich angeordneter Sensor, der der Überwachung eines toten Winkels dient, auch zur Parklückenvermessung verwendet werden. Durch unterschiedliche Ansteuerprogramme kann dabei das Sensorverhalten auf die jeweilige Anforderung der Aufgabe abgestimmt werden.

Durch die in den Unteransprüchen aufgeführten Maßnahmen sind vorteilhafte Weiterbildungen und Verbesserungen der im Hauptanspruch angegebenen Umfeldüberwachungsvorrichtung möglich. Besonders vorteilhaft ist, dass Sensoren, deren Messprinzipien auf verschiedenen physikalischen Vorgängen beruhen, einsetzbar und austauschbar sind. Je nach Ausstattung des Fahrzeugs können dabei verschiedene Sensortypen oder Sensortechnologien eingesetzt und gegebenenfalls auch nachgerüstet werden. Hierdurch kann ein technologischer Fortschritt in der Sensortechnik während der Lebensdauer des Fahrzeugs ausgenutzt werden.

Es ist ferner vorteilhaft, den Sensoreinheiten Schnittstellen zuzuordnen, über die Daten von durch die Sensoreinheiten ermittelten Objekten, z.B. eine gemessene Entfernung, an die Sensorsteuereinheit übertragen wird. Indem keine speziellen, insbesondere noch von einem physikalischen Messprinzip abhängigen Signale, sondern unmittelbar Listen mit Objekten und deren Attribute, wie beispielsweise Geschwindigkeit, Größe und/oder Form übertragen werden, wird die Austauschbarkeit der einzelnen Sensoreinheiten erleichtert.

Weiterhin ist vorteilhaft, auch das Betriebsprogramm der Umfelderfassunsgseinheit und/oder der Sensorsteuereinheit austauschbar und/oder erweiterbar zu gestalten, so dass eine Nachrüstung neuer Sensoren oder ein Austausch von Sensoren sowie eine Anpassung von neuen Funktionen problemlos möglich ist. Wird z.B. an ein Fahrzeug eine Anhängerkupplung montiert, so kann das Programm in der Steuereinheit mit einem Auswerteprogramm für an einem Anhänger angeordnete Sensoren erweitert werden. Werden z.B. erstmals seitlich an einem Fahrzeug Sensoren nachgerüstet, so ist ein neues Programm zur Durchführung einer Toten-Winkel-Erkennung ergänzbar.

Ferner ist vorteilhaft, die Leistungsfähigkeit und/oder die Verfügbarkeit einzelner Sensoren abfragbar zu gestalten, so dass der Sensorsteuereinheit bekannt ist, welcher Sensor welche Leistung hat und ob die jeweilige Sensoreinheit verfügbar ist. Insbesondere ist eine zustandsabhängige Erfassung vorteilhaft, bei der z.B. abhängig von einer Verschmutzung des Sensors dessen Leistungsfähigkeit vielleicht sogar vollständig eingeschränkt ist. Gegebenenfalls wird einem Fahrer angezeigt, aus welchem Grund eine von ihm gewünschte Anwendung, z.B. eine Einparkhilfe, zur Zeit nicht zur Verfügung steht.

Weiter ist vorteilhaft, die Daten einer Vielzahl von Sensoren in Echtzeit zu verarbeiten, um voraussagbare Ausführungszeiten zu gewährleisten und eine hohe Zuverlässigkeit in der Datengüte zu erreichen.

Es ist weiterhin vorteilhaft, eine Abstandsmessung von der Umfelderfassungseinheit an die Sensorsteuereinheit zu geben, die dann lediglich Ergebnisse bezüglich dieser Anfrage an die Umfelderfassungseinheit zurück liefert. Die Umfelderfassungseinheit kann damit sensorunabhängig ausgeführt werden, wobei in einem bevorzugten Ausführungsbeispiel die Anforderungen von der Umfelderfassungseinheit an die Sensorsteuereinheit übertragen wird. Die Sensorsteuereinheit kann nun aus den ihr zur Verfügung stehenden Sensoren die für die durchzuführenden Aufgaben entsprechend den übermittelten Anforderungen geeignete Sensoren auswählen und einen Messvorgang mit den jeweiligen Sensoren durchführen bzw. eine Fehlermeldung ausgegeben.

Um einen Echtzeitbetrieb für die entsprechenden Applikationen möglichst vieler, verschiedener Messverfahren gleichzeitig unter Berücksichtigung der Ausführungsressourcen und Prioritäten der Applikationen zu erlauben, wird ein Echtzeitbetriebssystem eingesetzt.

Um die von den Sensoren erfassten Daten effizient verarbeiten zu können, werden.nur Daten von solchen Sensoreinheiten übertragen, die von der Sensorsteuereinheit zu einer Datenübertragung aufgefordert werden.

### Zeichnung

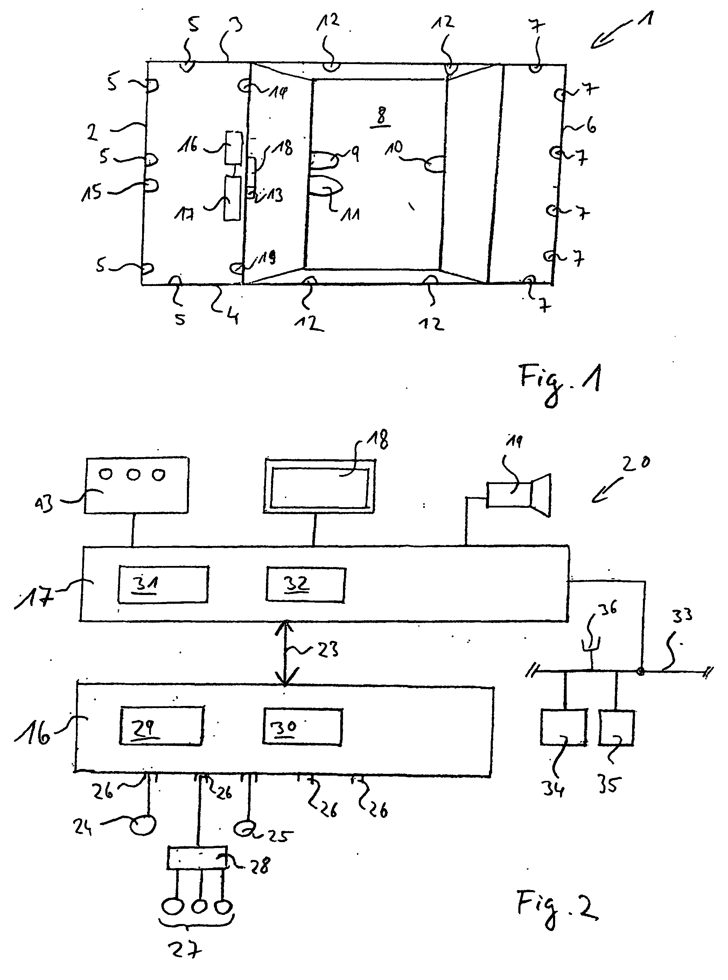

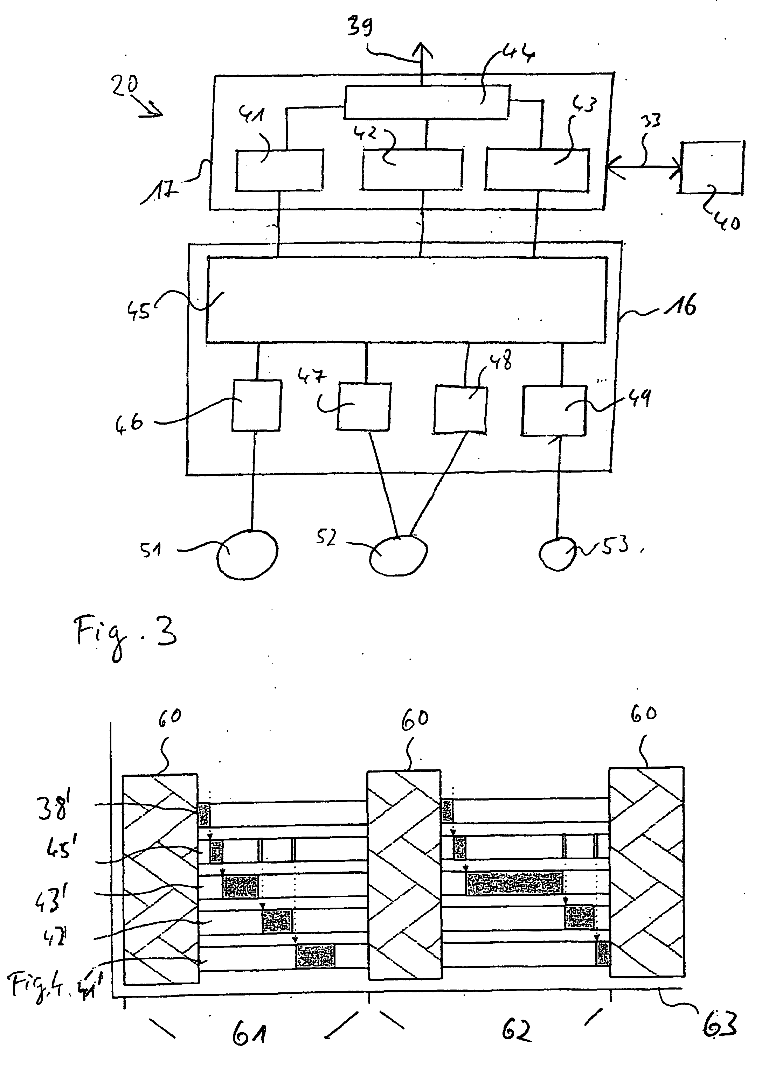

Ausführungsbeispiele der Erfindung sind in der Zeichnung dargestellt und in der nachfolgenden Beschreibung näher erläutert. Es zeigen Figur 1 eine Aufsicht auf ein Kraftfahrzeug mit Sensoren und Steuereinheiten, Figur 2 ein Ausführungsbeispiel für eine erfindungsgemäße Umfeldüberwachungsvorrichtung, Figur 3 einen Ausführungsbeispiel für Funktionsblöcke innerhalb der erfindungsgemäßen Umfeldüberwachungsvorrichtung gemäß der Figur 2, Figur 4 ein Beispiel für einen Zeitablauf für verschiedene, durchgeführte Aufgaben.

### Beschreibung des Ausführungsbeispiels

Die erfindungsgemäße Umfeldüberwachungsvorrichtung kann für beliebige Fahrzeuge verwendet werden, so z.B. für Flugzeuge, für Schienenfahrzeuge oder für Schiffe. Im folgenden ist die erfindungsgemäße Umfeldüberwachungsvorrichtung am Beispiel einer Verwendung in einem Kraftfahrzeug erläutert. Die Umfeldüberwachung ist dabei nicht allein auf eine Abstandsmessung beschränkt, sondern eine Vielzahl darauf aufbauender Funktionen sind durchführbar. Die Umfeldüberwachung dient dabei z.B. für die Durchführung einer Einparkhilfe, für eine Zusammenstosserkennung, für die Durchführung eines geschwindigkeitsgeregelten Folgefahrens für die Vermessung von Parklücken, für die Ermittlung eines Fahrzeugs in einem toten Winkel, für eine Fahrwerkssteuerung, für eine Scheinwerfersteuerung, für eine Verkehrszeichenerfassung sowie für eine automatischen Fahrzeugführung. Ferner sind Abstandsmessungen z.B. für die Messbereiche bis 2m, bis 7m oder auch für die Messung einer Relativgeschwindigkeit zu einem sich in der Umgebung des Fahrzeugs befindlichen Hindernisses möglich. Weitere Funktionen können in der Umfeldüberwachungsvorrichtung nachgerüstet werden.

In der Figur 1 ist die Aufsicht auf ein Kraftfahrzeug 1 dargestellt, an dem eine Vielzahl von Sensoren angeordnet sind. An dem Fahrzeug können Sensoren gleicher oder verschiedener Sensortechnologien und/oder verschiedener Messprinzipien an für die Messaufgabe möglichst günstigen Stellen angeordnet sein. Je nach Bedarf können diese Sensoren auch ausgetauscht oder ergänzt werden. In dem in der Figur 1 dargestellten Ausführungsbeispiel ist beispielhaft eine Sensorkombination gewählt, bei der an einer Vorderseite 2 des Kraftfahrzeugs 1 sowie an den vorderen Bereichen einer rechten Fahrzeugseite 3 und an einer linken Fahrzeugseite 4 Ultraschallsensoren 5 angeordnet sind, die mittels eines Echoverfahrens die Entfernung zu einem Objekt bestimmen. Vorzugsweise erzeugen die Ultraschallsensoren Listen mit den von Ihnen erfassten Objekten, denen Attribute, z.B. in Form der Eigenschaften Geschwindigkeit, Entfernung, Größe und/oder Form zugewiesen werden. Ergänzend ist ein Radarsensor 15 an der Vorderseite 2 angeordnet, der insbesondere zur Überwachung des vorausfahrenden Verkehrs eingesetzt wird. Ferner können auch optische Sensoren eingesetzt werden, die Lichtsignale z.B. in einem sichtbaren Wellenbereich für eine Umfeldüberwachung verwenden. Mit Lasersensoren ist z.B. mittels der Reflexion des Laserlichts eine Abstandsmessung möglich. An der Rückseite 6 des Fahrzeugs sind Ultraschallsensoren 7, vorgesehen, ebenso an den beiden Fahrzeugseiten 3, 4 in der Nähe der Rückseite 6. An den beiden Fahrzeugseiten 3, 4 sind jeweils Radarsensoren 12 angeordnet, die neben dem Kraftfahrzeug 1 fahrende Fahrzeuge erfassen können.

An einem Fahrzeugdach 8 sind weitere Sensoren anbringbar. In einem bevorzugten Ausführungsbeispiel sind dort eine erste und eine zweite Videokamera 9, 10 angeordnet, wobei die erste Videokamera 9 in eine Vorderrichtung und die zweite Videokamera 10 in eine Rückrichtung des Fahrzeugs gerichtet ist. Vorzugsweise ist an dem Fahrzeugdach 8 zudem eine Infrarotkamera 11 angeordnet, die eine Nachtsicht oder eine Sicht bei Nebel erlaubt. Auch von den Kameravorrichtungen sind Listen mit Objekten und deren Attributen, z.B. Geschwindigkeit, Entfernung, Größe, Form, Bilddaten, an die Sensorsteuereinheit 16 übermittelbar. Zudem kann auch ein Videosignal übertragen werden. Außer den Kameravorrichtungen können an dem Fahrzeugdach beliebige andere Sensoren angeordnet sein.

Die Daten der Sensoren werden zu einer Sensorsteuereinheit 16 übermittelt, die die von den Sensoren erfassten Daten auswertet. Ein Ergebnis dieser Auswertung wird an eine Umfelderfassungseinheit 17 weitergeleitet, in der geprüft wird, ob eine Warnung eines Fahrers erfolgen soll. Ist dies der Fall, so wird eine Warneinrichtung z.B. in Form einer Anzeige 18 im Fahrzeug aktiviert, mit der eine optische Warnung möglich ist. Stattdessen oder auch ergänzend kann eine akustische Warnung über einen Lautsprecher 19 in dem Fahrzeug erfolgen. Die Umfelderfassungseinheit 17 dient somit einerseits als Schnittstelle gegenüber dem Fahrer und anderen Fahrzeugsystemen, andererseits fordert sie die Messungen von der Sensorsteuereinheit ein, die die von ihr durchgeführten Anwendungen benötigen, ohne dass sie selbst aktiv Sensoreinheiten ansteuert.

Während einige Funktionen automatisch mit dem Starten des Fahrzeugs aktivierbar sind, so z.B. die Erfassung seitlicher Hindernisse, ist z.B. die Funktion einer Einparkhilfe über das Einlegen eines Rückwärtsgangs automatisch auslösbar. Mit der Betätigung einer Bedieneinheit 13 können Funktionen zudem manuell gestartet oder beendet werden.

In der Figur 2 ist ein erstes Ausführungsbeispiel für eine erfindungsgemäße Umfelderfassungsvorrichtung 20 dargestellt. Die Umfelderfassungsvorrichtung 20 weist eine Umfelderfassungseinheit 17 auf, die mit einer Sensorsteuereinheit 16 vorzugsweise über einen Datenbus 23 verbunden ist. An die Sensorsteuereinheit 16 sind einzelne Sensoren 24, 25 an Schnittstellen 26 angeschlossen. Ferner kann auch eine Vielzahl von Sensoren 27 mittels einer zwischengeschalteten Verbindungseinheit 28 an eine Schnittstelle 26 angeschlossen werden. Die Sensorsteuereinheit 16 weist eine Recheneinheit 29 und eine Speichereinheit 30 auf. Die Umfelderfassungseinheit 17 weist ebenfalls eine Recheneinheit 31 und eine Speichereinheit 32 auf. An die Umfelderfassungseinheit 17 ist die Bedieneinheit 13, die Anzeige 18 und der Lautsprecher 19 angeschlossen. Ferner ist die Umfelderfassungseinheit 17 mit einem Datenbus 33 verbunden, an den weitere Fahrzeugmodule anschließbar sind. In dem dargestellten Ausführungsbeispiel ist zumindest eine Motorsteuerungseinheit 34 und ein Bremssteuersystem 35 an den Datenbus 33 angeschlossen und damit mit der Umfelderfassungseinheit 17 verbunden. Vorteilhaft wird der Umfelderfassungseinheit 17 über den Datenbus 33 auch mitgeteilt, welcher Gang eingelegt ist.

Insbesondere werden Listen mit von den Sensoren erfassten Objekten und deren Eigenschaften von den Sensoren 24, 25, 27 an die Sensorsteuereinheit 16 und von dieser an die Umfelderfassungseinheit 17 übertragbar. Ferner können auch erfasste Bilddaten von den Sensoren über den Datenbus 23 zu der Umfelderfassungseinheit 17 und damit zu der Anzeige 18 geführt werden. Die Anzeige 18 ist in einem bevorzugten Ausführungsbeispiel als eine Flüssigkristallanzeige ausgeführt, in der z.B. neben Abstandswarnungen auch von den Sensoren erfasste Bilddaten darstellbar sind. Ergänzend oder stattdessen können auch einfache Anzeigen, z.B. in der Form von mehreren Leuchtdioden oder von Segment-Flüssigkristallanzeigen Entfernungsangaben darstellen. Ferner wird in einem bevorzugten Ausführungsbeispiel die Bedieneinheit 13 zur Auswahl von den durch die Umfelderfassungseinheit 17 durchgeführten Funktionen verwendet. Der Lautsprecher 19 ist vorzugsweise einem Autoradio des Kraftfahrzeugs 1 zugeordnet, wobei einem an dem Lautsprecher 19 anliegendem Audiosignal des Autoradios ein von der Umfelderfassungseinheit 17 ausgegebenes Warnsignal überlagert wird. Über den Datenbus 33 können zusätzliche Informationen, insbesondere auch für das Auslösen eines Programms der Umfelderfassungseinheit 17 übermittelt werden. Ferner wird über den Datenbus 33 der Umfelderfassungseinheit 17 das Starten des Fahrzeugmotors übertragen. Durch das Einlegen eines Rückwärtsgangs wird automatisch ein Betriebsprogramm für die Funktion einer Einparkvorrichtung gestartet. Ferner kann eine Aktivierung einer Funktion z.B. von einem Geschwindigkeitssignal abhängig sein und z.B. erst bei einer Mindestgeschwindigkeit aktiviert werden. Eine Einparkhilfe kann z.B. dann aktiviert werden, wenn die Fahrzeuggeschwindigkeit unterhalb einer vorgegebenen Geschwindigkeit von z.B. 20 km/h liegt. Mit Hilfe einer periodischen Messung nach vorn und den vorderen Seiten werden Situationen erkannt, auf die gegebenenfalls automatisch mit einer Änderung der Messbereiche und/oder Messmodi reagiert werden kann. Nachfolgend kann durch eine Berechnung der Relativgeschwindigkeit zwischen dem Fahrzeug und einem Objekt kalkuliert werden, ob das Fahrzeug noch rechtzeitig gebremst werden kann oder ob und wann es gegebenenfalls zu einem Zusammenstoß kommt. Gegebenenfalls können bereits geeignete Maßnahmen, z.B. ein Airbagauslösen oder ein Absenden eines Hilfesignals, vorzugsweise ein Funksignal, vorbereitet werden. Umgekehrt können jedoch von der Umfelderfassungseinheit 17 auch Anordnungen an die an den Datenbus 33 angeschlossenen Geräte gegeben werden. Fährt ein Fahrer beispielsweise auf ein Hindernis zu, so kann bei einem Unterschreiten eines vorgegebenen Abstandes eine Notbremsung und/oder ein Abschalten des Antriebs ausgelöst werden.

Programme zur Durchführung verschiedener Anwendungen, insbesondere der oben genannten möglichen Umfelderfassungen und - überprüfungen, sind in der Speichereinheit 32 der Umfelderfassungseinheit 17 gespeichert. In Abhängigkeit von einer Aktivierung durch Fahrzeugzustände, also durch eine Datenübermittlung über den Datenbus 33 oder durch manuelle Aktivierung über die Bedieneinheit 13, wird die jeweilige Anwendung von der Recheneinheit 31 gestartet, wobei die Anwendungen in der Speichereinheit 32 vorzugsweise nichtflüchtig abgelegt sind. Der Inhalt der Speichereinheit 32 kann über eine an der Umfelderfassungseinheit 17 angeordnete Schnittstelle oder in einem bevorzugten Ausführungsbeispiel über eine an dem Datenbus 33 angeordnete Schnittstelle 36 ausgetauscht oder ergänzt werden. Hierdurch können Anwendungsprogramme aktualisiert werden. In der Speichereinheit 30 der Sensorsteuereinheit 16 sind die Daten der Eigenschaften der an die Schnittstellen 26 angeschlossenen Sensoren abgelegt. Bei einer Initialisierung der Sensorsteuereinheit 16 werden diese Daten durch eine Abfrage der an die Schnittstellen 26 angeschlossenen Sensoren aktualisiert. Von der Umfelderfassungseinheit 17 wird an die Sensorsteuereinheit 16 mit der aufgerufenen Funktion übertragen, in welche Richtung des Fahrzeugs eine Überwachung gewünscht wird, welche Entfernungen abzudecken sind, mit welcher Häufigkeit eine Messung erfolgen soll und in welchem Messmodus gemessen werden soll. Hierauf wird regelmäßig eine Liste mit Objekten und ihren Attributen oder eine Bildinformation zurückgeliefert. Von den Sensoren wird an die Sensorsteuereinheit 16 übertragen, welche Daten sie bereitstellen können, in welchem Bereich sie messen können und mit welcher Frequenz sie Messungen durchführen können. In Abhängigkeit von den durch die gewählte Funktion vorgegebenen Anforderungen wird von der Steuerungseinheit der jeweilige Sensor festgelegt, der Daten liefern soll, und gegebenenfalls seine Betriebsart und die Frequenz, mit der Daten an die Sensorsteuereinheit übertragen werden sollen. Vorzugsweise werden auch relevante Fahrzeugdaten, wie z.B. die Fahrzeuggeschwindigkeit, mit einbezogen. In der Sensorsteuereinheit 16 erfolgt vorzugsweise eine Fusion der Messdaten mehrerer Sensoren. Die Sensorsteuereinheit 16 und die Umfelderfassungseinheit 17 sind in einem ersten Ausführungsbeispiel als zwei getrennte Steuereinheiten ausgeführt, die in dem Kraftfahrzeug vorzugsweise hinter der Instrumententafel angeordnet sind. In einer weiteren Ausführungsform ist statt einer Verbindung von getrennt ausgeführten Einheiten über den zwischen den Steuereinheiten vorgesehenen Datenbus 23 auch eine Verbindung über den Datenbus 33 möglich. In einem weiteren Ausführungsbeispiel kann die Umfelderfassungseinheit 17 und die Sensorsteuereinheit 16 auch in einem Gerät ausgeführt sein, wobei die Steuereinheiten 16, 17 hierbei durch zwei Recheneinheiten realisiert oder durch ein Programm in Software nachgebildet sind. In dieser Ausführungsform erfolgt ein Datenaustausch zwischen der Sensorsteuereinheit 16 und der Umfelderfassungseinheit 17 über Softwareschnittstellen.

In der Figur 3 ist die Funktionsweise der Umfelderfassungsvorrichtung 20 dargestellt. An der Umfelderfassungseinheit 17 ist eine Ein- und Ausgabeschnittstelle 44 angeordnet, die über einen Datenausgang 39 mit der Bedieneinheit 13, der Anzeige 18 und den Lautsprechern 19 verbunden ist. Die Ein-Ausgabeschnittstelle 44 führt die Anzeige und die akustische Ausgabe von Warnungen durch. Ferner leitet sie auch empfangene Videosignale an die Anzeige 18 weiter. Über die Bedieneinheit 13 eingegebene Befehle werden von ihr ebenso erfasst, wie über den Datenbus 33 von einem Fahrzeugsystem 40 übermittelte Werte. In Abhängigkeit von den durchgeführten Eingaben oder den erfassten Daten werden Anwendungen innerhalb der Umfelderfassungseinheit 17 gestartet. In dem in der Figur 3 dargestellten Ausführungsbeispiel werden eine erste Anwendung 41, eine zweite Anwendung 42 und eine dritte Anwendung 43 zugleich ausgeführt. Die Anzahl der zugleich ausgeführten Anwendungen ist dabei variabel, so dass weniger, aber auch mehr Anwendungen von der Umfelderfassungseinheit 17 verarbeitbar sind. Für jede Anwendung wird eine entsprechende Verbindung zu einem Verwaltungsprogramm 45 der Sensorsteuereinheit 16 geschaffen. Das Verwaltungsprogramm 45 überträgt die in den Anwendungen 41, 42, 43 festgelegten Anforderungen. In Abhängigkeit von der jeweiligen Anforderung wird ein Sensormessprogramm festgelegt. In dem Ausführungsbeispiel gemäß der Figur 3 ist für die Sensoren ein erstes Messprogramm 46, ein zweites Messprogramm 47, ein drittes Messprogramm 48 und ein viertes Messprogramm 49 aktiviert. Die Sensormessprogramme greifen auf verschiedene Sensorgruppen zu, die an dem Kraftfahrzeug 1 angeordnet sind. Die Frequenz des Zugriffs bzw. der Durchführung der Messung ist dabei von der jeweiligen Anwendung abhängig. Die Messanforderungen werden von dem Verwaltungsprogramm 45 mit der Steuerung und dem Aufruf des jeweiligen Messprogramms festgelegt. Dabei können verschiedene Messprogramme auch auf den gleichen Sensor zugreifen. In dem gewählten Ausführungsbeispiel greift das erste Messprogramm 46 auf eine erste Sensorgruppe 51, das zweite und dritte Messprogramm 47, 48 beide auf die zweite Sensorgruppe 52 und das vierte Messprogramm 49 greift auf und eine dritte Sensorgruppe 53 zu. Die Sensorgruppen könne jeweils aus einem oder aus einer Vielzahl einzelner Sensoren bestehen, wobei eine Fusion der Daten von einer Vielzahl von Sensoren in einer Verbindungseinheit 28 oder in der Sensorsteuereinheit 16 selbst erfolgen kann. Die anhand der Figur 2 erläuterte Funktionen wird beispielhaft für die folgenden Anwendungen erläutert:

Eine Rückraumüberwachung ist eine erste Anwendung 41, eine Parklückenvermessung ist eine zweite Anwendung 42 und eine Einparkhilfe ist eine dritte Anwendung 43. Für die erste Anwendung 41 wird von dem Verwaltungsprogramm 45 ein erstes Messprogramm 46 ausgewählt, mit dem eine Bildübertragung von der zweiten, nach hinten gerichteten Videokamera 10 des Kraftfahrzeugs 1 durchgeführt wird. Als Objekt werden Bilddaten übertragen. In regelmäßigen Zeitabständen wird eine Bildinformation von der zweiten Videokamera 10, die als ein erster Sensor 51 betrieben wird, über die Ein-Ausgabeschnittstelle 44 in die Anzeige 18 übertragen. Bei der Parklückenvermessung, der zweiten Anwendung 42, bei der das Kraftfahrzeug an einer Fahrzeugreihe entlang fährt und mittels der Sensoren eine für das Kraftfahrzeug 1 hinreichend große Parklücke bestimmt wird, wird sowohl ein drittes Messprogramm zum Betrieb der Radarsensören 12 an der rechten Fahrzeugseite 3 als auch ein viertes Betriebsprogramm für die Ultraschallsensoren 5, 7 in der Nähe der rechten Fahrzeugseite gestartet. Von den Radarsensoren 12 wird der Abstand zu der passierten Fahrzeugreihe gemessen, während mittels der Ultraschallsensoren 5, 7 die Parklückenlänge im Detail bestimmt wird. Als Objekte werden mögliche Parklücken und ihre Länge übertragen, anhand der die Umfelderfassungseinheit 17 je nach einer gespeicherten Fahrzeuggröße und/oder nach einer Benutzervorgabe entscheiden kann, ob die Parklücke geeignet für einen Einparkvorgang ist. Die dritte Anwendung 43, die Einparkhilfe, dient einer Zusammenstosswarnung, mit der ein zweites Messprogramm 47 zur Ansteuerung ebenfalls der Radarsensoren 12 aktiviert wird. Fährt der Fahrer zu weit rechts oder links oder fährt ein Auto plötzlich aus der Fahrzeugreihe hinaus, so kann rechtzeitig eine Warnung oder eine Reaktion, z.B. ein Bremsvorgang, ausgelöst werden. Als Objekte werden Hindernisse mit ihrem Abstand übertragen. In einer bevorzugten Ausführungsform wird auch übertragen, ob und wie stark sich das Hindernis bewegt.

In der Figur 4 ist ein zeitlicher Ablauf für die in der Umfelderfassungseinheit 17 ablaufenden Programme dargestellt. In der Figur 4 sind ein erstes Zeitfenster 61 und ein darauffolgendes zweites Zeitfenster 62 dargestellt. Helle dargestellte Flächen bezeichnen Zeiträume, in denen das jeweilige Programm inaktiv ist, während die dunkel bzw. schraffiert eingezeichneten Flächen Zeiträume bezeichnen, in denen das jeweilige Programm abgearbeitet wird. Über einer Zeitachse 63 sind hierbei die verschiedenen in der Umfelderfassungseinheit 17 durchgeführten Programme aufgetragen. Ein Zeitfenster für eine Messsequenz, die vorzugsweise 10ms lang ist, beginnt jeweils mit einem Übertragungsfenster 60, in dem die Daten zwischen den einzelnen Programmen über die jeweiligen Datenbusse und Schnittstellen übertragen werden. Durch die Unterteilung in Zeitfenster 61, 62 ist dabei sichergestellt, dass spätestens zu Beginn des nächsten Zeitfensters mit dem Abarbeiten einer neu hinzugekommenen Funktion mit hoher Priorität begonnen werden kann. Den einzelnen Funktionen können bei dem Abarbeiten unterschiedliche Zeitdauern zugeordnet werden, wie dies in der Figur 4 ersichtlich ist, wobei der ersten, zweiten und dritten Anwendung 41, 42, 43 in der Umfelderfassungseinheit 17 für eine Verarbeitung der jeweils empfangenen Daten nacheinander variierbare Zeitrahmen zur Verfügung stehen, die jeweils mit Zuordnung zu den Bezugszeichen 41', 42' und 43' dargestellt sind. Dabei erfolgt eine Überwachung der jeweiligen Zeiten durch ein Verwaltungsprogramm 45', dessen Aufruf zwischen den einzelnen Anwendungen und vor einem Anlauf der dritten Anwendung 43 erfolgt. Es erfolgt eine Einleitung durch ein Hauptprogramm, dessen Betriebsdauer 38 zu Beginn der jeweiligen Auswerteperiode an das Übertragungsfenster 60 anschließt. Das Verwaltungsprogramm 45' kann bei Bedarf, z.B. bei einer zu starken.Verzögerung, den Ablauf einer Anwendung auch abbrechen. Damit ist sichergestellt, dass bei Laufzeitproblemen einer Anwendungsfunktion nicht die Abarbeitung der übrigen Anwendungsfunktionen unvorhersehbar wird. Durch die Reihenfolge der Abarbeitung wird eine Priorisierung wichtiger Funktionen gewährleistet. In dem vorliegenden Fall ist z.B. der Bearbeitungszeitraum 43' der Funktion Zusammenstoßerkennung dem der Funktion der Parklückenerkennung 42' und Video-Rückraumüberwachung 41' gegenüber zeitlich vorgezogen. In dem zweiten Zeitfenster wird die Bearbeitung der Zusammenstosserkennung zeitlich gegenüber den anderen, hinsichtlich ihrer Priorität nachgeordneten Anwendungen verlängert, z.B. weil sich die Anzahl der erfassten Objekte erhöht hat.

## Patentansprüche

1. Umfeldüberwachungsvorrichtung insbesondere in einem Kraftfahrzeug (1) mit einer Umfelderfassungseinheit (17), mit einer Sensorsteuereinheit (16) und mit Sensoreinheiten (5, 7, 9, 10, 11, 12, 15, 51, 52, 53), wobei die Sensoreinheiten von der Sensorsteuereinheit (16) angesteuert werden, wobei eine Ansteuerung der Sensoreinheiten (5, 7, 9, 10, 11, 12, 15, 51, 52, 53) durch die Sensorsteuereinheit (16) in Abhängigkeit von einer über die Umfelderfassungseinheit (17) vorgegebenen Anforderung durchgeführt wird, wobei für die Durchführung der Messung mittels der Sensoreinheiten verschiedene Messprogramme (46, 47, 48, 49) in der Sensorsteuereinheit vorgesehen sind, wobei zur Festlegung durch die Steuereinheit, in Abhängigkeit von der Anforderung, in welche Richtung des Fahrzeugs eine Überwachung gewünscht wird, welche Entfernungen abzudecken sind, mit welcher Häufigkeit eine Messung erfolgen soll und in welchem Messmodus gemessen werden soll, welcher Sensoreinheit Daten liefern soll, die Sensoreinheiten an die Sensorsteuereinheit übertragen; welche Daten sie bereitstellen können, in welchem Bereich sie messen können und mit welcher Frequenz sie Messungen durchführen können, wobei einige der Messprogramme auf die gleichen Sensoreinheiten zugreifen, und wobei die von den Sensoreinheiten erfassten Daten von der Sensorsteuereinheit zur Weiterleitung an die Umfelderfassungseinheit (17) ausgewertet werden.

2. Umfeldüberwachungsvorrichtung nach Anspruch 1, **dadurch gekennzeichnet, dass** die Sensoreinheiten (5, 7, 9, 10, 11, 12, 15, 51, 52, 53) austauschbar sind und das mit verschiedenen Messprinzipien arbeitende Sensoreinheiten einsetzbar sind.

3. Umfeldüberwachungsvorrichtung nach einem der vorhergehenden Ansprüche, **dadurch gekennzeichnet, dass** an den Sensoreinheiten (5, 7, 9, 10, 11, 12, 15, 51, 52, 53) Schnittstellen angeordnet sind und dass über die Schnittstellen eine gemessene Entfernung und ein Signal zur Durchführung einer Messung übertragen wird.

4. Umfeldüberwachungsvorrichtung nach einem der vorhergehenden Ansprüche, **dadurch gekennzeichnet, dass** in der Sensorsteuereinheit ein Messprogramm (46, 47, 48, 49) ergänzbar und/oder austauschbar ist.

5. Umfeldüberwachungsvorrichtung nach einem der vorhergehenden Ansprüche, **dadurch gekennzeichnet, dass** die Sensoreinheiten (5, 7, 9, 10, 11, 12, 15, 51, 52, 53) Radarsensoren, optische Sensoren im sichtbaren Wellenbereich und/oder Ultraschallsensoren sind.

6. Umfeldüberwachungsvorrichtung nach einem der vorhergehenden Ansprüche, **dadurch gekennzeichnet, dass** durch die Sensorsteuereinheit (16) eine Leistungsfähigkeit und/oder eine Verfügbarkeit der Sensoreinheiten (5, 7, 9, 10, 11, 12, 15, 51, 52, 53) abfragbar ist und dass ein Messprogramm (46, 47, 48, 49) in Abhängigkeit von der Leistungsfähigkeit und/oder der Verfügbarkeit einer Sensoreinheit festlegbar ist.

7. Umfeldüberwachungsvorrichtung nach einem der vorhergehenden Ansprüche, **dadurch gekennzeichnet, dass** in der Sensorsteuereinheit (16) die Daten einer Vielzahl von Sensoren insbesondere in Echtzeit verarbeitbar sind.

8. Umfeldüberwachungsvorrichtung nach einem der vorhergehenden Ansprüche, **dadurch gekennzeichnet, dass** bei Unterschreiten eines vorgegebenen Abstands zu einem Hindernis eine Warnung ausgegeben wird.

9. Umfeldüberwachungsvorrichtung nach einem der vorhergehenden Ansprüche, **dadurch gekennzeichnet, dass** in der Umfelderfassungseinheit (17) Programme (41, 42, 43) für die Umfeldüberwachung gespeichert sind und dass Anforderungen der Programme (41, 42, 43) an eine durchzuführende Messung gespeichert sind.

10. Verfahren zur Umfeldüberwachung insbesondere in einem Kraftfahrzeug, wobei durch eine Umfelderfassungseinheit eine Messung von einer Sensorsteuereinheit angefordert wird, wobei Sensoreinheiten von der Sensorsteuereinheit mit der Durchführung einer Messung in Abhängigkeit von der Anforderung betraut wird, wobei mit der Anforderung übermittelt wird, in welche Richtung des Fahrzeugs eine Überwachung gewünscht wird, welche Entfernungen abzudecken sind, mit welcher Häufigkeit eine Messung erfolgen soll und in welchen Messmodus gemessen werden soll, wobei zur Festlegung, welcher Sensoreinheit Daten liefern soll, die Sensoreinheiten an die Sensorsteuereinheit übertragen, welche Daten sie bereitstellen können, in welchem Bereich sie messen können und mit welcher Frequenz sie Messungen durchführen können, wobei verschiedene Messprogramme auf die gleichen Sensoreinheiten zugreifen, wobei die Sensorsteuereinheit die von den Sensoreinheiten erfassten Daten auswertet und wobei das Ergebnis der Auswertung an die Umfelderfassungseinheit weitergeleitet wird.

11. Verfahren zur Umfeldüberwachung nach Anspruch 10, **dadurch gekennzeichnet, dass** der Umfelderfassungseinheit Abstandswerte und/oder Waminformationen und/oder Bilddaten geliefert werden.

12. Verfahren nach einem der Ansprüche 10-11, **dadurch gekennzeichnet, dass** die verschiedenen Programme zeitversetzt durchgeführt werden.

13. Verfahren nach einem der Ansprüche 10-12, **dadurch gekennzeichnet, dass** eine Datenübertragung der Sensoreinheiten nur auf eine Anforderung durchgerührt wird.

14. Verfahren nach einem der Ansprüche 10-13, **dadurch gekennzeichnet, dass** durch die Sensorsteuereinheit eine Leistungsfähigkeit und/oder eine Verfügbarkeit der Sensoreinheiten abgefragt wird und dass ein Messprogramm in Abhängigkeit von der Leistungsfähigkeit und/oder der Verfügbarkeit einer Sensoreinheit festgelegt wird.

## Claims

1. Environment monitoring device, in particular in a motor vehicle (1) having an environment sensing unit (17), having a sensor control unit (16) and having sensor units (5, 7, 9, 10, 11, 12, 15, 51, 52, 53), wherein the sensor units are actuated by the sensor control unit (16), wherein the sensor units (5, 7, 9, 10, 11, 12, 15, 51, 52, 53) are actuated by the sensor control unit (16) as a function of a request which is predefined by means of the environment sensing unit (17), wherein various measurement programmes (46, 47, 48, 49) are provided in the sensor control unit for carrying out the measurement by means of the sensor units, wherein, in order for the control unit to determine, as a function of the request, in which direction of the vehicle monitoring is desired, what distances ought to be covered, with which frequency measurement is to take place and in which measurement mode measurement is to be carried out, which sensor unit is to supply data, which sensor units transmit to the sensor control unit, which data they can make available, which range they can measure in and with which frequency they can carry out measurements, wherein some of the measurement programmes access the same sensor units and wherein the data sensed by the sensor units is evaluated by the sensor control unit in order to be passed on to the environment sensing unit (17).

2. Environment monitoring device according to Claim 1, **characterized in that** the sensor units (5, 7, 9, 10, 11, 12, 15, 51, 52, 53) can be exchanged and **in that** sensor units which operate with various measuring principles can be used.

3. Environment monitoring device according to one of the preceding claims, **characterized in that** interfaces are arranged at the sensor units (5, 7, 9, 10, 11, 12, 15, 51, 52, 53), and **in that** a measured distance and a signal for carrying out a measurement are transmitted via the interfaces.

4. Environment monitoring device according to one of the preceding claims, **characterized in that** a measurement programme (46, 47, 48, 49) can be added to and/or replaced in the sensor control unit.

5. Environment monitoring device according to one of the preceding claims, **characterized in that** the sensor units (5, 7, 9, 10, 11, 12, 15, 51, 52, 53) are radar sensors, optical sensors in the visible wave range and/or ultrasonic sensors.

6. Environment monitoring device according to one of the preceding claims, **characterized in that** the sensor control unit (16) can interrogate a performance capability and/or an availability of the sensor units (5, 7, 9, 10, 11, 12, 15, 51, 52, 53), and **in that** a measurement programme (46, 47, 48, 49) can be defined as a function of the performance capability and/or the availability of a sensor unit.

7. Environment monitoring device according to one of the preceding claims, **characterized in that** the data of a plurality of sensors can be processed in the sensor control unit (16), in particular in real time.

8. Environment monitoring device according to one of the preceding claims, **characterized in that** when the distance from an obstacle drops below a predefined value a warning is issued.

9. Environment monitoring device according to one of the preceding claims, **characterized in that** programmes (41, 42, 43) for monitoring the environment are stored in the environment sensing unit (17), and **in that** requests from the programmes (41, 42, 43) for a measurement which is to be carried out are stored.

10. Method for monitoring the environment, in particular in a motor vehicle, wherein a measurement by a sensor control unit is requested by an environment sensing unit, wherein the sensor control unit assigns the execution of a measurement to sensor units as a function of the request, wherein the request conveys in which direction of the vehicle monitoring is desired, which distances are to be covered, with which frequency a measurement is to be carried out and in which measuring mode measurement is to be carried out, wherein, in order to determine which sensor unit is to supply data, which sensor units transmit to the sensor control unit, which data they can made available, in which range they can measure and with which frequency they can carry out measurements, wherein various measuring programmes access the same sensor units, wherein the sensor control unit evaluates the data sensed by the sensor units, and wherein the result of the evaluation is passed on to the environment sensing unit.

11. Method for monitoring the environment according to Claim 10, **characterized in that** the environment sensing unit is supplied with distance values and/or warning information and/or image data.

12. Method according to one of Claims 10 to 11, **characterized in that** the various programmes are carried out with a chronological offset.

13. Method according to one of Claims 10 to 12, **characterized in that** data is transmitted to the sensor units only on request.

14. Method according to one of Claims 10 to 13, **characterized in that** the sensor control unit interrogates a performance capability and/or an availability of the sensor units, and **in that** a measuring programme is defined as a function of the performance capability and/or the availability of a sensor unit.

## Revendications

1. Dispositif de surveillance de l'environnement, notamment dans un véhicule automobile (1), doté d'une unité de détection de l'environnement (17), d'une unité de commande de capteur (16) et d'unités de capteur (5, 7, 9, 10, 11, 12, 15, 51, 52, 53), dans lequel
- les unités de capteur sont commandées par l'unité de commande de capteur (16), une excitation des unités de capteur (5, 7, 9, 10, 11, 12, 15, 51, 52, 53) étant réalisée par l'unité de commande de capteur (16) en fonction d'une demande prédéfinie via l'unité de détection de l'environnement (17),
- l'unité de commande de capteur comporte différents programmes de mesure (46, 47, 48, 49) prévus pour la réalisation de la mesure par les unités de capteur,
- afin qu'en fonction de la demande concernant dans quelle direction du véhicule une surveillance est souhaitée, quelles sont les distances à couvrir, à quelle fréquence une mesure doit être faite, quel mode de mesure doit être appliqué, l'unité de commande fixe quelle unité de capteur doit fournir des données, les unités de capteurs transmettent à l'unité de commande de capteur quelles sont les données qu'ils peuvent élaborer, dans quelle plage elles sont mesurées et à quelle fréquence sont prises les mesures,
- certains programmes de mesure recourent aux mêmes unités de capteur, et
- les données saisies par les capteurs sont exploitées par l'unité de commande des capteurs pour être transmises à l'unité de détection d'environnement (17).

2. Dispositif selon la revendication 1,
**caractérisé en ce que**
les unités de capteur (5, 7, 9, 10, 11, 12, 15, 51, 52, 53) peuvent être échangées et des unités de capteur fonctionnant avec différents principes de mesure peuvent être employées.

3. Dispositif selon l'une quelconque des revendications précédentes,
**caractérisé en ce que**
des interfaces sont placées sur les unités de capteur (5, 7, 9, 10, 11, 12, 15, 51, 52, 53), et une distance mesurée et un signal de réalisation d'une mesure sont communiqués via les interfaces.

4. Dispositif pour évaluer l'environnement selon l'une quelconque des revendications précédentes,
**caractérisé en ce qu'**
un programme de mesure (46, 47, 48, 49) peut être remplacé et/ou échangé dans l'unité de commande de capteur.

5. Dispositif selon l'une quelconque des revendications précédentes,
**caractérisé en ce que**
les unités de capteur (5, 7, 9, 10, 11, 12, 15, 51, 52, 53) sont des capteurs radar, des capteurs optiques dans la plage d'ondes visible et/ou des capteurs à ultrasons.

6. Dispositif selon l'une quelconque des revendications précédentes,
**caractérisé en ce qu'**
une capacité et/ou une disponibilité des unités de capteur (5, 7, 9, 10, 11, 12, 15, 51, 52, 53) peut être demandée par l'unité de commande de capteur (16), et un programme de mesure (46, 47, 48, 49) peut être défini en fonction de la capacité et/ou de la disponibilité d'une unité de capteur.

7. Dispositif selon l'une quelconque des revendications précédentes,
**caractérisé en ce que**
les données d'un grand nombre de capteurs peuvent être retraitées, notamment en temps réel, dans l'unité de commande de capteur (16).

8. Dispositif selon l'une quelconque des revendications précédentes,
**caractérisé en ce qu'**
en cas de dépassement d'une distance donnée par rapport à un obstacle, un signal d'avertissement est émis.

9. Dispositif selon l'une quelconque des revendications précédentes,
**caractérisé en ce que**
des programmes (41, 42, 43) de surveillance d'environnement sont enregistrés dans l'unité de détection d'environnement (17), et des demandes des programmes (41, 42, 43) au niveau d'une mesure à réaliser sont enregistrées.

10. Procédé de surveillance de l'environnement en particulier dans un véhicule automobile, selon lequel
- une mesure est demandée par une unité de commande de capteur via une unité de surveillance d'environnement,
- des unités de capteur sont confiées par l'unité de commande de capteur à la réalisation d'une mesure en fonction de la demande, la demande permettant de déterminer dans quelle direction du véhicule une surveillance est souhaitée, quelles sont les distances à couvrir, à quelle fréquence une mesure doit être prise, et dans quel mode de mesure la mesure doit être prise,
- pour déterminer quelle unité de capteur doit délivrer des données, les unités de capteur communiquent à l'unité de commande de capteur quelles données elles peuvent élaborer, dans quelle plage elles peuvent être mesurées et à quelle fréquence elles peuvent prendre les mesures,
- différents programmes de mesure recourent aux mêmes unités de capteur, et
- l'unité de commande de capteur exploite les données saisies par les unités de capteur et le résultat de l'exploitation est communiqué à l'unité de détection d'environnement.

11. Procédé selon la revendication 10,
**caractérisé en ce que**
des valeurs d'intervalle et/ou des informations d'avertissement et/ou des données-images sont délivrées à l'unité de détection d'environnement.

12. Procédé selon l'une quelconque des revendications 10-11,
**caractérisé en ce que**
les différents programmes sont réalisés avec un décalage dans le temps.

13. Procédé selon l'une quelconque des revendications 10-12,
**caractérisé en ce qu'**
un transfert de données des unités de capteur n'est réalisé que sur une demande.

14. Procédé selon l'une quelconque des revendications 10-13,
**caractérisé en ce qu'**
une capacité et/ou une disponibilité des unités de capteur est demandée par l'unité de commande de capteur, et un programme de mesure est défini en fonction de la capacité et/ou de la disponibilité d'une unité de capteur.
